# EUROPEAN PATENT APPLICATION

(11) **EP 2 192 343 A1**
(43) Date of publication of application: **02.06.2010**
(21) Application number: 08425757.5
(22) Date of filing: 26.11.2008
(51) Int. Cl.: F21S 8/00, F21V 33/00, H04R 1/02, F21W 131/109

(54) **Outdoor audio and lighting device**

(71) Applicant: Charon S.A.S. di Capitani Vittorio E C., 43100 Parma (IT); Deepdesign S.r.l., 20122 Milano (IT)
(72) Inventor: Capitani, Vittorio, 43100 Parma (IT); Bazzicalupo,Leopoldo Matteo, 25040 Iseo (Brescia) (IT)
(74) Representative: Conti, Marco

(57) **Abstract**

Outdoor audio and lighting device (1) comprising:
a case (6) provided with a cover (8) and a lateral wall (7);
a watertight capsule (25) housed inside the case (6) and
containing an audio receiver (2) for acquiring signals representative of a sound and an audio amplifier (4) for amplifying said signals;
a loudspeaker (14) mounted on the top of the capsule (25) in order to emit sound waves corresponding to said signals through a plurality of lateral apertures (11) of the case (6);
a photovoltaic cell (15) housed within the cover (8) and
an electric accumulator (16) housed inside the case (6) and serving to store the energy received from said photovoltaic cell (15);
at least one lighting element (20) configured so as to illuminate a lateral zone around the device (1).

## Description

The present invention relates to an outdoor audio and lighting device ("outdoor" applications are commonly spoken of). In particular, the proposed device can be installed in public parks, for example to broadcast information or musical entertainment while emitting light at the same time. Alternatively, the device may also be used in private gardens or courtyard areas.

Solutions combining a lamp post and audio loudspeaker are presently known. However, such solutions, though they can be positioned in outdoor environments, require protection against the elements, which may be achieved, for example, by means of roof-like structures.

Moreover, such solutions are fixed, i.e. once installed they can be removed only by specialised technicians.

The lighting device described in EP 1884711 is also known. It consists of a hollow cylindrical housing that can be mounted upon a pole (e.g. a sunshade). The bases of the cylindrical housing accommodate luminous elements (e.g. LEDs) for illuminating an area below or above the device. Furthermore, the device is provided with a radio receiver connected to a loudspeaker for transmitting music or information.

The chief drawback of this device lies in the fact that both the sound waves and rays of light are emitted in a non-uniform manner around the device.

A further limitation of the device described is tied to the absence of any weather protection.

In this context, the technical task at the basis of the present invention is to propose an outdoor audio and lighting device which overcomes the foregoing limitations of the prior art.

In particular, it is an object of the present invention to propose an outdoor audio and lighting device capable of emitting sound waves and rays of light uniformly around the device itself.

Another object of the present invention is to provide an outdoor audio and lighting device provided with protection against atmospheric agents and which is resistant to humidity, abrasion and wear.

A further object of the present invention is to propose an outdoor audio and lighting device that is autonomous and easy to install and remove.

Another object of the present invention is to provide an outdoor audio and lighting device that is compact and easy to transport.

A further object of the present invention is to propose an outdoor audio and lighting device with a higher diffusion efficiency compared to prior art devices.

The technical task and the objects specified are substantially achieved by means of an outdoor audio and lighting device comprising the technical characteristics described in one or more of the appended claims.

Further characteristics and advantages of the present invention will become more apparent from the following description of a preferred, but not exclusive, embodiment of an outdoor audio and lighting device, illustrated solely by way of non-restrictive example in the appended drawings, in which:

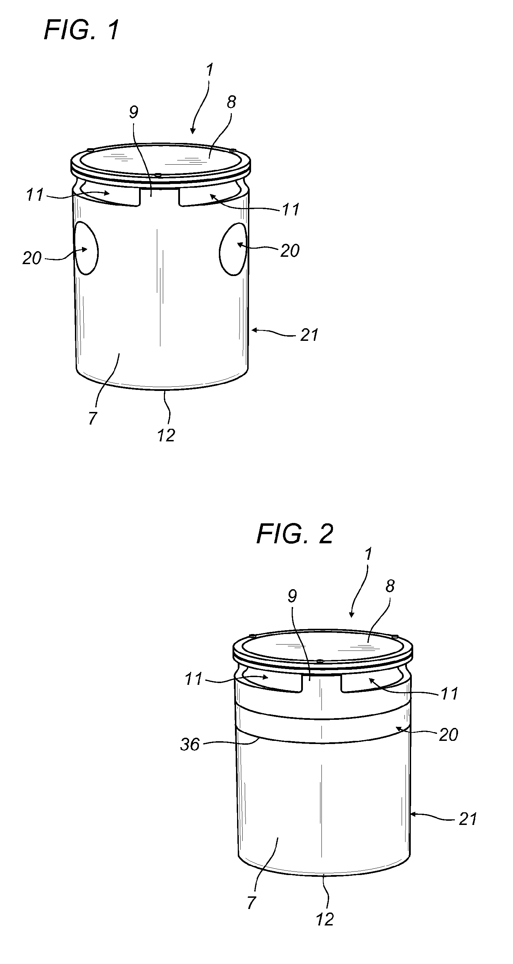

- figure 1 illustrates a perspective view of an outdoor audio and lighting device according to the present invention;

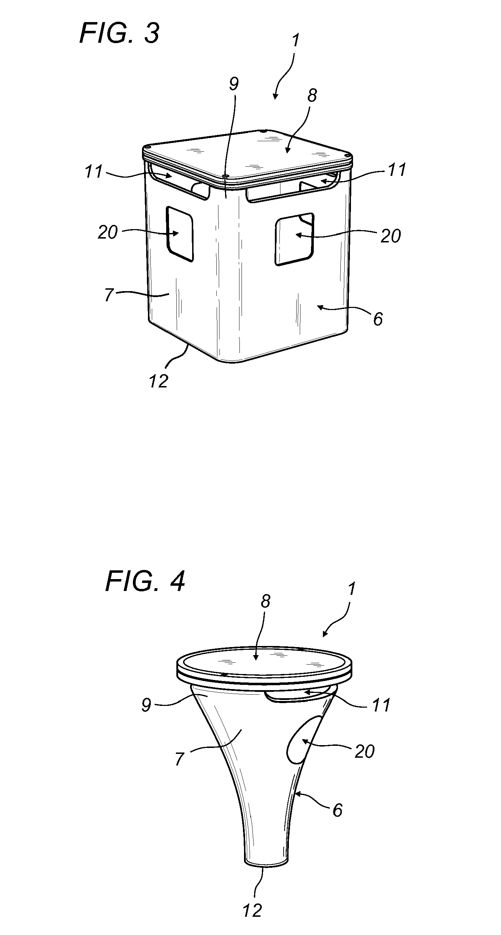

- figures 2, 3 and 4 illustrate perspective views of three further embodiments of the device of figure 1;

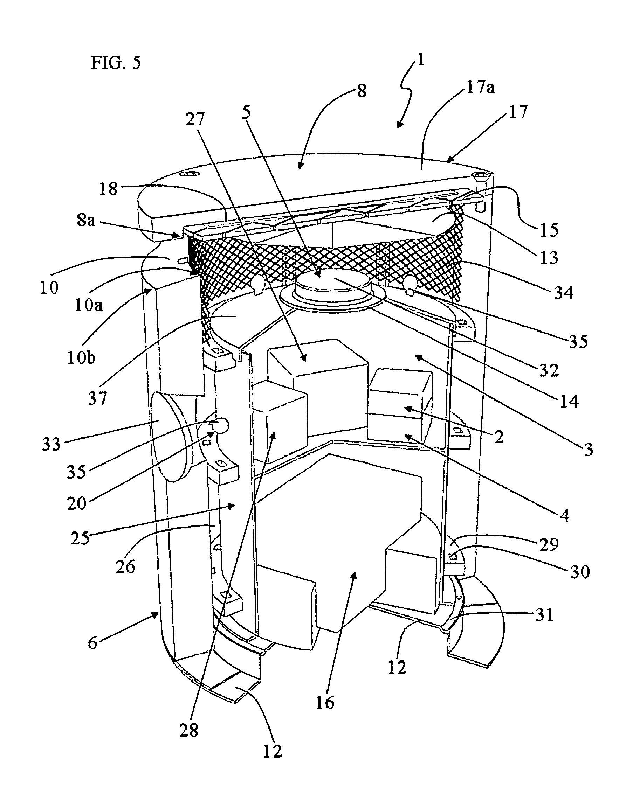

- figure 5 shows a cutaway view of the device of figure 1;

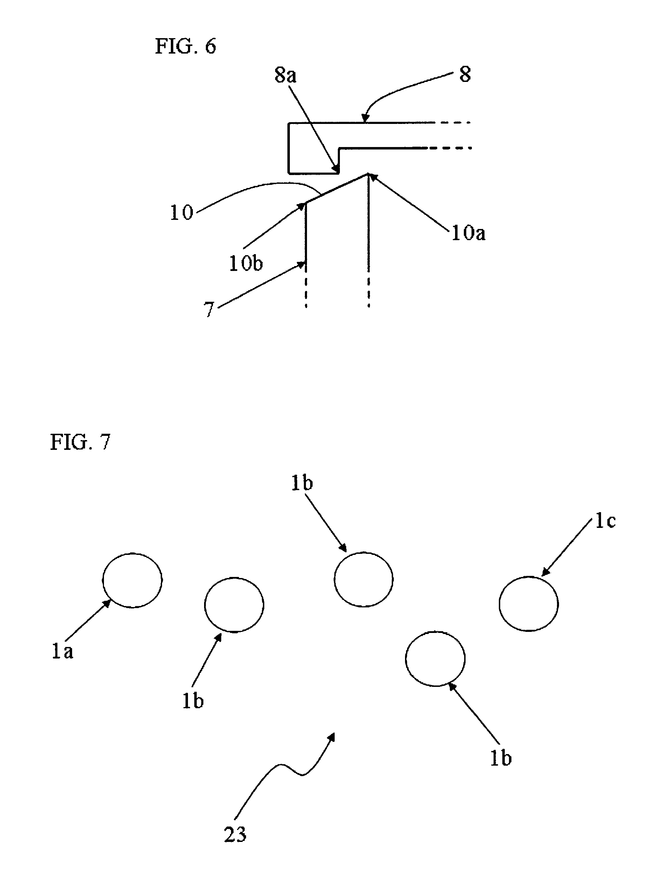

- figure 6 shows a lateral sectional view of an enlarged detail of the device of figure 1;
- figure 7 illustrates a schematic view from above of a system of devices according to the present invention.

With reference to the figures, 1 indicates an outdoor audio and lighting device. The device 1 comprises an audio receiver 2 for acquiring signals representative of a sound. Preferably, the audio receiver 2 is of the wireless type. More preferably, the audio receiver 2 is of the Bluetooth type. Alternatively, the audio receiver 2 is a radio frequency or Zigbee receiver.

The device 1 also comprises an audio amplifier 4 connected to the audio receiver 2 so as to amplify the acquired signals.

The device 1 is moreover provided with an audio transducer 5 connected to the audio amplifier 4 in order to transmit sound waves corresponding to the signals previously acquired by means of the audio receiver 2.

The audio receiver 2, the audio amplifier 4 and the audio transducer 5 audio are housed in a single case 6 provided with a lateral wall 7 and a cover 8. Originally, the case 6 defines a plurality of lateral apertures 11 through which the sound waves are emitted laterally and uniformly toward the outside of the device 1. Preferably, the lateral apertures 11 are equally spaced apart so as to have omnidirectional diffusion of sound.

In the embodiment described and illustrated here, the cover 8 is connected to an upper rim 10 of the lateral wall 7 by means of spacer elements 9. As a result, the cover 8 is spaced from the lateral wall 7, thereby defining the lateral apertures 11. Advantageously, the spacer elements 9 are joined to the upper rim 10 by means of rounded profiles. Preferably, the spacer elements 9 and the case 6 form a single, seamless structure.

Preferably, the aperture 11 is a slit configured in such a way as to allow the sound waves to pass through to the outside of the device 1 and orient them in a direction parallel to the cover 8. In particular, the height of the slit is defined by the height of the spacer elements 9, i.e. around 2 cm.

Advantageously, the upper rim 10 of the lateral wall 7 is inclined so that a inside edge 10a of the upper rim 10 is at a greater distance from a bottom 12 of the case 6 than an outside edge 10b of the upper rim 10 itself. In particular, the cover 8 has an inner projecting corner 8a facing a zone of the upper rim 10 which lies between the inside edge 10a and the outside edge 10b.

Advantageously, the case 6 is configured so as to define an internal volume 3 protected against the elements. In particular, the case 6 contains a watertight capsule 25 occupying said internal volume 3. The capsule 25 is spaced from the lateral wall 7 so as to define an interspace 26. Preferably, the receiver 2 and the amplifier 4 are housed inside the capsule 25.

Advantageously, the audio 5 transducer is placed inside the case 6 so as to surmount the capsule 25. Preferably, the transducer 5 is accommodated at the centre of a sloping cover 37 of the capsule 25. In particular, the audio transducer 5 consists in a loudspeaker 14. In the embodiment described and illustrated here, the loudspeaker 14 is oriented in such a way that the so-called "front emission" of sound waves is directed prevalently toward the bottom 12 of the case 6 and the so-called "rear emission" of sound waves is preferably directed toward the lateral wall 7. The loudspeaker 14 is provided with a magnet 32 which, suitably polarised, determines a "synchronised" emission of the sound waves. Preferably, within the case 6 there is also present a baffle element 13, positioned above the transducer 5 so as to orient the sound waves towards the aperture 11.

Innovatively, a mechanical barrier 34 is placed inside the case 6 to protect the internal volume 3 against foreign bodies. In particular, the mechanical barrier 34 is comprised of a protective mesh, for example to prevent the entry of insects into the capsule 25.

In the embodiment described and illustrated here, the device 1 comprises a photovoltaic cell 15 exposed to solar radiation. In particular, the photovoltaic cell 15 is housed within the cover 8 in such a way that solar radiation strikes it in a substantially perpendicular direction. Preferably, the cover 8 comprises a transparent element 17 disposed above the photovoltaic cell 15 and having a flat or convex outer surface 17a. For example, said transparent element 17 consists of a lens, or a portion of glass or plexiglass. More preferably, an intermediate layer 18 made of resin is present between the photovoltaic cell 15 and the transparent element 17.

The energy received by the photovoltaic cell 15 is stored in an electric accumulator 16 housed inside the case 6. Preferably, the electric accumulator 16 is comprised of a battery connected to a charge regulator 27 which serves to optimise the accumulation of energy and to prevent the battery from either overcharging or discharging. The charge regulator 27 is connected to a changeover switch 28, preferably for switching from 3V to 12V.

In the embodiment described here, the audio amplifier 4 is connected to the electric accumulator 16, which supplies the correct operating voltage. Preferably, the device 1 is also equipped with an emergency power supply (not illustrated) that can be connected to the electric mains so that the audio amplifier 4 may be supplied with the correct voltage in case of failure of the electric accumulator 16.

Preferably, the case 6 has a cylindrical shape and the lateral wall 7 of the case 6 forms the lateral surface of a cylinder 21. In particular, the cover 8 represents the upper base of the cylinder 21. The capsule 25 also preferably has a cylindrical shape. In a first embodiment, the cylinder 21 has a height of around 30 cm and a diameter of around 25 cm. In a second embodiment, the cylinder has a height of around 130 cm and a diameter of around 25 cm.

Alternatively, the case 6 has the shape of a parallelepiped or a tapered shape that narrows toward the bottom.

Innovatively, vibration damping elements 29 are placed within the interspace 26 to attenuate phenomena of resonance inside the case 6. These vibration damping elements 29 have the shape of substantially circular rings provided with holes 30 to permit water or condensate to flow down toward the bottom 12 of the case 6. At the bottom 12 of the case 6 there is formed a drainage channel 31 having a substantially circular configuration. The channel 31 is perforated so that the water that collects in it will be expelled downwards and outside the device 1.

In an embodiment not illustrated here, the lateral wall 7 of the case 6 is internally grooved to facilitate the run-off of water or condensate toward the bottom 12 of the case 6. Preferably, a plastic film having grooves oriented parallel to a longitudinal axis of the cylinder 21 is applied on the inside of said lateral wall 7.

Preferably, the case 6 is made of plywood. In particular, plywood rings are curved individually and maintained under tension. Alternatively, the case 6 is made of stone (e.g. marble) or ceramics. Other possible materials the case 6 may be constructed from are cement or galvanised iron.

Preferably, an exterior covering, for example one made of plastic, is applied on the case 6. In particular, the exterior covering reproduces the visual effect of materials such as wood, metal, marble or other types of stone.

Innovatively, the device 1 is provided with at least one lighting element 20 configured so as to illuminate a lateral zone around the device 1. Advantageously, the device 1 has a control unit that communicates with the photovoltaic cell 15 in order to detect luminosity and with the lighting element 20 in order to activate it. In particular, the control unit is provided with a sensor capable of detecting the luminosity of the solar radiation incident upon the photovoltaic cell 15 and a switch for activating the lighting element 20 under set conditions.

Preferably, the device 1 is provided with a plurality of lighting elements 20 spaced equally apart in such a manner that the rays of light are emitted around the device 1 in an omnidirectional manner. For example, each lighting element 20 comprises at least one monochromatic LED 35 housed inside the case 6. Alternatively or in addition, each lighting element 20 comprises at least one traditional light bulb or a plurality of LEDs using the RGB colour model.

In particular, the LED 35 has an efficiency of approximately 55 lumens and a power of approximately 1 Watt. Said LED 35 emits light rays through a slot 33 fashioned in the lateral wall 7. Preferably, said slot 33 is closed off by a lens or a portion of glass or plexiglass.

Alternatively or in addition, some lighting elements 20 are placed at the top of the capsule 25 in order to emit light rays through the lateral apertures 11. In particular, several LEDs 35 are fixed onto the sloping cover 37 of the capsule 25.

In a further embodiment, the lighting element 20 consists of a closed, substantially circular illuminated strip 36 applied on the exterior around the lateral wall 7 of the case 6. In particular, a recess is fashioned (for example by milling) on the exterior of the lateral wall 7 to accommodate said illuminated strip 36.

The lighting elements 20 are connected to the electric accumulator 16. Moreover, the lighting elements 20 are preferably connected to the emergency power supply.

In the embodiment described and illustrated here, the device 1 has three LEDs 35 inside the case 6, three slots 33 and three lateral apertures 11. In particular, each slot 33 is situated beneath one of the lateral apertures 11 so as to form equally spaced pairs of audio-light emission. For example, relative to the longitudinal axis of the cylinder 21, the pairs of audio-light emission are mutually disposed at angles of 120°.

Preferably, the device 1 is provided with means of anchorage to a pavement or ground surface. In particular, the means of anchorage are fitted exteriorly to the bottom 12 of the case 6. Preferably, the device 1 is equipped with a unit for adjusting and controlling the parameters relative both to the sound waves (e.g. it is possible to adjust the volume of sound or disable the audio amplifier 4) and lighting. This control unit can be directly connected to the device 1 or else it may operate remotely, by communicating with a dedicated receiver fitted inside the device 1.

Preferably, the device 1 is also equipped with a surveillance video camera, for example a panoramic camera. Preferably, the video camera is positioned inside the case 6, in proximity to the baffle element 13. Alternatively, the video camera is housed in the cover 8.

Preferably, the device 1 is provided with a microphone for picking up sounds.

Preferably, the device 1 is provided with an anti-theft security element.

Innovatively, a plurality of devices 1 is grouped together to form a system 23. At least one of the devices 1 of the system 23 (indicated as the "head" device 1a) is configured to receive signals from an outside source, e.g. a television apparatus, a radio or a sound reproduction equipment. The head device 1a comprises an audio emitter for retransmitting the acquired signals to at least one other device 1 of the system 23. In particular, the audio emitter is of the wireless type. Preferably, the system 23 of devices is structured like a chain comprising the head device 1a, a device 1c placed at the end of the chain (indicated as the "tail" device 1c) and a plurality of intermediate devices 1b. In particular, each intermediate device 1b of the system 23 is provided with an audio emitter. In the case of a chain made up of only two devices 1, only the head device 1a and tail device 1c will be present.

The functioning of the outdoor audio and lighting device according to the present invention is described in the paragraphs that follow.

The device 1 is fixed to the ground or pavement using the anchorage means present on the bottom 12 of the case 6.

Solar radiation strikes the photovoltaic cell 15 and the energy received is stored in the electric accumulator 16. The control unit sensor detects the luminosity of the radiation incident upon the photovoltaic cell 15. If such luminosity exceeds a prefixed threshold value (modifiable), the control unit will actuate the switch so as to activate the lighting element 20.

The audio receiver 2, connected for example to an outside source, acquires signals representative of sound, which are subsequently amplified by the audio amplifier 4. The loudspeaker 14 emits the sound waves corresponding to the amplified signals both toward the bottom 12 and toward the lateral wall 7 of the case 6. These sound waves strike the baffle element 13, which orients them toward the lateral apertures 11.

In the event of rain, the outer convex surface 17a of the transparent element 17 allows the water hitting the surface itself to flow over the cover 8. The water thus drained off can penetrate into the device 1 through the lateral apertures 11, arriving at the inner projecting corner 8a, from which it drips onto the upper rim 10 of the lateral wall 7. Said upper rim 10, being inclined, contributes to draining the water outside the device 1. If water should penetrate into the case 6 (for example due to irrigation of the area in which the device 1 is located), the water would pass through the holes 30 of the vibration damping elements 29 and collect in the drainage channel 31 which, being perforated, would expel it outside the device 1.

In a first embodiment of the system 23 of devices 1, the Bluetooth communication protocol is used. In particular, the head device 1a receives signals from the outside source via its audio emitter and retransmits them to the intermediate device 1b that follows it in the chain. In particular, each intermediate device 1b receives signals from the device 1 that precedes it (which may be the head device 1a or else one of the intermediate devices 1b) and retransmits them to the device that follows it (which may be the tail device 1c or else one of the intermediate devices 1b) In this manner, within the chain, each intermediate device 1b is capable of dialoguing with the device 1 that precedes it and with the device 1 that follows it in the chain.

In a second embodiment of the system 23 of devices 1, radio frequency transmission is used. In particular, the head device 1a receives signals from the outside source via its audio emitter and retransmits them to the remaining devices 1 of the system 23.

In the case of activation of the microphone, the sounds picked up from the surrounding environment are transmitted (amplified) by one device 1 to another within the chain.

The characteristics of the outdoor audio and lighting device according to the present invention emerge clearly from the foregoing description, as do the advantages thereof.

In particular, the lateral apertures fashioned in the case enable sound waves to be emitted laterally and uniformly toward the outside of the device.

Furthermore, since the audio-light emission pairs are equally spaced, both the sound waves and rays of light are emitted in an omnidirectional manner around the device.

Moreover, the device is simple and economical to construct since it is provided with a single loudspeaker for emitting sound waves and a baffle element for orienting them toward the lateral apertures.

Furthermore, since the watertight capsule encloses the receiver and audio amplifier, the device is able to resist the action of atmospheric agents.

Moreover, the convex outer surface of the transparent element and sloping cover of the capsule permit water to flow off, thus preventing stagnation.

In addition, the configuration of the upper rim of the lateral wall of the cylinder and the position of the inner projecting corner of the cover contribute to draining rainwater outside the case. The joining of the spacer elements by means of rounded profiles further contributes to drainage.

Furthermore, the holes present in the vibration damping elements and perforated drainage channel (or the grooves on the inside of the lateral wall) serve to convey any water that has accidentally entered the case, or the condensate forming inside the case itself, toward the bottom.

Moreover, thanks to the exterior covering of the case, the device is capable of resisting atmospheric agents, abrasion and wear.

In addition, the intermediate resin layer, by closely adhering both to the photovoltaic cell and to the transparent element, prevents infiltrations into the cover. The use of resin moreover favours the maintenance of transparency of the cover over time.

Furthermore, the presence of the photovoltaic cell and accumulator renders the device autonomous.

Moreover, the device can be easily installed and removed from the ground or pavement thanks to the fact that it is provided with anchorage means. Electrical installation of the device is also simplified, since it is sufficient to connect the emergency power supply to the electric mains.

Furthermore, the cylindrical shape of the case, besides increasing the diffusion efficiency of the device, also contributes to rendering it compact and easy to transport.

In addition, the protective mesh prevents insects from entering the watertight capsule and small animals from nesting inside the case.

Moreover, where lighting elements are present on the top of the capsule, light rays are emitted through the lateral apertures, thereby creating atmosphere lighting.

Furthermore, in the embodiment employing a closed illuminated strip, the construction of the device is even further simplified, as it is sufficient to apply the strip in the outer recess of the lateral wall.

Finally, the devices can communicate with one another so as to form a system (or chain) thanks to the presence of both audio receivers and emitters. This is particularly useful in cases where it is desired to transmit communications in real time via the microphones.

## Claims

1. Outdoor audio and lighting device(1) comprising:
an audio receiver (2) for acquiring signals representative of a sound;
an audio amplifier (4) connected to the audio receiver (2) to amplify said signals;
an audio transducer (5) connected to the audio amplifier (4) in order to emit sound waves corresponding to said signals;
a case (6) for housing the audio receiver (2), the audio amplifier (4) and the audio transducer (5), configured so as to define an internal volume (3) protected against the elements, said case (6) being provided with a lateral wall (7) and a cover (8) and defining a plurality of lateral apertures (11) through which the sound waves are emitted laterally and uniformly toward the outside of the device (1);
at least one lighting element (20) configured so as to illuminate a lateral zone around the device (1).

2. Device (1) according to claim 1, wherein the cover (8) is connected by means of spacer elements (9) to an upper rim (10) of the lateral wall (7) in such a way as to define said lateral apertures (11).

3. Device (1) according to claim 2, wherein said upper rim (10) is inclined so that the inside edge (l0a) of the upper rim (10) is at a greater distance from the bottom (12) of the case (6) than an outside edge (10b) of said upper rim (10), said cover (8) having a an inner projecting corner (8a) facing a zone of the upper rim (10) which lies between the inside edge (10a) and the outside edge (10b).

4. Device (1) according to any of the preceding claims, wherein the case (6) contains a capsule (25) occupying said internal volume (3), said capsule (25) being separated from the lateral wall (7) in such a way as to define an interspace (26).

5. Device (1) according to any of the preceding claims, **characterised in that** it comprises a mechanical barrier (34) placed inside the case (6) so as to protect the internal volume (3) against foreign bodies.

6. Device (1) according to any of the preceding claims, **characterised in that** it comprises a photovoltaic cell (15) housed within the cover (8) so as to receive solar radiation and an electric accumulator (16) housed inside the case (6) and serving to store the energy received from said photovoltaic cell (15).

7. Device (1) according to claim 6, **characterised in that** it comprises a unit for controlling the lighting element (20), communicating with the photovoltaic cell (15) in order to detect luminosity and with the lighting element (20) in order to activate it.

8. Device (1) according to claim 6 or 7, wherein the cover (8) comprises a transparent element (17) disposed above the photovoltaic cell (15) and having an outer convex surface (17a) so as to increase the irradiation efficiency of said photovoltaic cell (15).

9. Device (1) according to any of the preceding claims, **characterised in that** it comprises a baffle element (13) disposed inside the case (6) and above the audio transducer (5) so as to orient the sound waves toward said lateral apertures (11).

10. Device (1) according to any of the preceding claims, wherein said at least one lighting element (20) is placed inside the case (6) in such a way as to emit rays of light through the lateral apertures (11).

11. System (23) of devices (1) according to any of the preceding claims, wherein at least one of the devices (1) is configured to receive said signals from an outside source and comprises an audio emitter for retransmitting the acquired signals to at least one other device (1) of the system (23).
